# EUROPÄISCHE PATENTANMELDUNG

(11) **EP 2 589 985 A1**
(43) Veröffentlichungstag der Anmeldung: **08.05.2013**
(21) Anmeldenummer: 11187938.3
(22) Anmeldetag: 04.11.2011
(51) Int. Cl.: G01T 1/08, G01T 1/169

(54) **Verfahren und Vorrichtungen zum Nachweis einer Verstrahlung eines Gegenstands**

(71) Anmelder: Rapid-Clear AG, 4052 Basel (CH)
(72) Erfinder: Riedel, Felix Friedrich, 4056 Basel (CH)
(74) Vertreter: Latscha Schöllhorn Partner

(57) **Zusammenfassung**

Eine Strahlungserkennungsvorrichtung (1) zum Nachweis einer Verstrahlung eines Gegenstandes umfasst eine Sofortbildeinrichtung (2) mit einem eine strahlungsempfindliche Schicht (214) aufweisenden Bildträger (21) und einer Entwicklungseinrichtung (22) zur Entwicklung und Fixierung eines auf der strahlungsempfindlichen Schicht (214) des Bildträgers (21) eingeleiteten Bildes. Die Strahlungserkennungsvorrichtung (1) weist ferner ein Filter (3) auf, das die strahlungsempfindliche Schicht (214) des Bildträgers (21) abdeckt, so dass die strahlungsempfindliche Schicht (214) gefiltert bestrahlbar ist. Die Strahlungserkennungsvorrichtung (1) ermöglicht einen verhältnismäßig einfachen effizienten Nachweis von Verstrahlung von Gegenständen, Insbesondere können solche Strahlungserkennungsvorrichtungen (1) verhältnismäßig kostengünstig hergestellt werden, so dass sie effizient systematisch zur Prüfung von Waren und Personen eingesetzt werden können. Zudem sind mittels solcher Strahlungserkennungsvorrichtungen (1) erzeugte Bilder verhältnismäßig einfach optisch auswertbar, so dass die Auswertung von verhältnismäßig ungeschulten Personen zuverlässig vollzogen werden kann und dass auch eine effiziente (semi-)automatische Auswertung beziehungsweise ein (semi-)automatisches Screening möglich ist.

## Beschreibung

### Technisches Gebiet

Die Erfindung betrifft ein Verfahren zum Nachweis einer Verstrahlung eines Gegenstands gemäß dem Oberbegriff des unabhängigen Patentanspruchs 8 sowie eine Strahlungserkennungsvorrichtung zum Nachweis einer Verstrahlung eines Gegenstandes und ein Auswertegerät zum Auswerten eines mit dem erfindungsgemäßen Verfahren erzeugten Bildes bezüglich einer von einer Verstrahlung verursachten Schattierung.

### Stand der Technik

Unter Radioaktivität wird bekanntermaßen die Eigenschaft instabiler Atomkerne verstanden, sich spontan unter Energieabgabe umzuwandeln, wobei die dabei freiwerdende Energie typischerweise als ionisierende Strahlung abgegeben wird lonisierende Strahlung umfasst verschiedene Strahlungsarten. Beispielsweise unterscheidet man Alpha-, Beta-, Gamma- und Neutronenstrahlung. Alphastrahlung ist eine Teilchenstrahlung, bei der Heliumkerne, die aus zwei Protonen und zwei Neutronen aufgebaut sind, von einem Alphastrahler als Strahlungsquelle emittiert werden. Ihre kinetische Energie beträgt je nach Strahlungsquelle zwischen 5 Mega-Elektronenvolt (MeV) und 11 MeV. Betastrahlung ist eine Teilchenstrahlung, die aus Elektronen oder in seltenen Fällen aus Positronen besteht, und eine kinetische Energie von 0,024 MeV aufweist. Gammastrahlung ist eine elektromagnetische Strahlung mit kleiner Wellenlänge. Sie ist ungeladen und hat eine verschwindend kleine Photonenmasse. Die Gammastrahlung stellt eine hochfrequente Röntgenstrahlung dar, deren kinetische Energie 0,1 MeV bis 2 MeV beträgt.

Die drei erwähnten Strahlungsarten (Alpha-, Beta-, Gammastrahlung) unterscheiden sich durch ihr Verhalten im elektrischen und magnetischen Feld, sowie ihrer Fähigkeit Materialien unterschiedlich stark zu durchdringen. Reichweite und Durchdringungsfähigkeit der Strahlung nehmen in der Reihenfolge Alpha-, Beta-, Gammastrahlung stark zu.

Des Weiteren gibt es auch die Neutronenstrahlung als ionisierende Strahlung, bei der Neutronen aus einem Atomkern herausgeschleudert werden können, falls der Atomkern mit Alphateilchen beschossen wird. Die dazu benötigten Kerne stammen beispielsweise aus Radium 226, einem Alphastrahler. Die gebildeten Neutronen haben eine kinetische Energie von maximal 7,8 eV. Für viele Kernreaktionen sind Neutronen wichtige Reaktionspartner, da sie als ungeladene Teilchen nicht von den positiv geladenen Kernen abgestoßen werden.

Die insbesondere für biologische Organismen häufig schädigende und/oder unerwünschte Wirkung von ionisierender Strahlung in Abhängigkeit von der Strahlungsintensität und Expositionsdauer ist heute hinlänglich benannt Entsprechend ist das Erkennen von verstrahlten beziehungsweise strahlenden und insbesondere radioaktiven Waren und Personen in der heutigen Zeit häufig und zunehmend ein Bedürfnis. Beispielsweise kann es ein Anliegen sein, zu verhindern, dass radioaktiv verstrahlte Lebensmittel zu Konsumenten gelangen. Oder es kann ein Bedürfnis bestehen, Personen und/oder Waren zu prüfen, die aus einem Gebiet kommen, das beispielsweise nach einem Reaktorunfall als potentiell verstrahlt gilt.

Zur Erkennung solcher radioaktiver Waren und Personen sowie auch allgemein zum Messen von ionisierender Strahlung werden heutzutage geeignete Geräte wie typischerweise Geigerzähler eingesetzt. In der Anwendung wird ein solcher Geigerzähler für eine bestimmte Zeit in die Nähe der potentiell radioaktiven Ware beziehungsweise Person gebracht, wo er die ionisierende Strahlung verhältnismäßig präzis misst. Ein Benutzer des Geigerzählers kann an den Messwerten sowie häufig auch auf Grund akustischer und/oder optischer Signale erkennen, ob die gemessene Ware beziehungsweise Person als verstrahlt gilt oder nicht. Die Aktivität eines radioaktiven Stoffs beziehungsweise Ware und Person wird üblicherweise in Becquerel (Bq) angegeben. Die Aktivität gibt dabei die mittlere Anzahl der Atomkerne an, die pro Sekunde radioaktiv zerfallen, das heißt ein Becquerel entspricht einem radioaktiven Zerfall pro Sekunde. Zur Bestimmung der Strahlenbelastung beziehungsweise Verstrahlung einer Ware und insbesondere eines biologischen Organismus wird typischerweise das Sievert (Sv) als Maßeinheit verschiedener gewichteter Strahlendosen herangezogen. Ein Sievert entspricht dabei einem Joule (J) pro Kilogramm (kg).

Die beschriebene Prüfung von Waren und Personen mittels Geräten wie Geigerzählern setzt üblicherweise voraus, dass die Benutzer dieser Geräte verhältnismäßig gut geschult sind und sich in der Bedienung des Geräts auskennen. Zudem müssen die Benutzer die Messung zusammen mit den typischerweise verhältnismäßig teuren Geräten durchführen, was verhältnismäßig lange dauern kann beziehungsweise die Benutzer verhältnismäßig lange beschäftigen kann. Zudem können Geigerzähler normaterweise entweder nur Alphastrahlung oder Beta- und Gammastrahlung messen, was dazu führt, dass entweder nur bestimmte ionisierende Strahlungen gemessen werden oder mehrere Messungen mit verschiedenen Geigerzählern durchgeführt werden müssen. All dies führt dazu, dass die beschriebene Prüfung von Waren und Person auf Verstrahlung verhältnismäßig kosten- und zeitintensiv ist. Eine systematische Prüfung von Waren und Personen beziehungsweise ein Screening ist heutzutage in den meisten Fällen zu aufwändig, so dass entsprechend typischerweise höchstens stichprobenartig Waren und Personen geprüft werden. Es verbleibt damit ein Risiko, dass verstrahlte Waren und Personen nicht geprüft werden und in den Umlauf geraten.

Aufgabe der nachfolgenden Erfindung ist es daher, ein Verfahren und/oder eine Einrichtung vorzuschlagen, mit der eine Verstrahlung eines Gegenstands effizient nachgewiesen kann.

### Darstellung der Erfindung

Die Aufgabe wird erfindungsgemäß durch eine Strahlungserkennungsvorrichtung gelöst, wie sie im unabhängigen Anspruch 1 definiert ist. Vorteilhafte Ausführungsvarianten der erfindungsgemäßen Vorrichtung ergeben sich aus den abhängigen Ansprüchen.

Das Wesen der Erfindung besteht im Folgenden: Eine Strahlungserkennungsvorrichtung zum Nachweis einer Verstrahlung eines Gegenstandes umfasst eine Sofortbildeinrichtung mit einem eine strahlungsempfindliche Schicht aufweisenden Bildträger und einer Entwicklungseinrichtung zur Entwicklung und Fixierung eines auf der strahlungsempfindlichen Schicht des Bildträgers eingeleiteten Bildes. Die Strahlungserkennungsvorrichtung umfasst weiter ein Filter, das die strahlungsempfindliche Schicht des Bildträgers abdeckt, so dass die strahlungsempfindliche Schicht gefiltert bestrahlbar ist.

Der Begriff "Verstrahtung" bezieht sich in Zusammenhang auf die Strahlungseigenschaften des Gegenstands bezüglich einer ionisierenden Strahlung. Insbesondere kann er sich darauf beziehen, dass der Gegenstand ionisierende Strahlung in einem unüblichen beziehungsweise unerwarteten Ausmaß emittiert und somit als verstrahlt gilt. Ein solcher verstrahlter Gegenstand kann eine Quelle einer ionisierenden Strahlung sein und es kann wünschenswert sein, diesen Gegenstand zu identifizieren und eventuell aus dem Verkehr zu ziehen beziehungsweise zu behandeln.

Der Begriff "Gegenstand" bezieht sich im Zusammenhang mit der Erfindung auf eine beliebige Ware oder ein Lebewesen beispielsweise eine Person.

Die Sofortbildeinrichtung kann ein Sofortbildfilm sein. Sie kann dazu ausgestaltet sein, gemäß einem Trennbildverfahren oder insbesondere gemäß einem Intergralfilmverfahren verwendet zu werden. Sofortbildeinrichtungen sind im Stand der Technik aus der (Sofortbild-)Fotografie hinlänglich bekannt und werden beziehungsweise wurden beispielsweise von den Firmen Polaroid Corporation, Eastman Kodak Company und Fujifilm Holdings Corporation hergestellt. Unter dem Begriff "Sofortbiidfotografie" wird ein fotografisches Verfahren verstanden, bei dem unmittelbar nach der Aufnahme durch in lichtempfindlichen Schichten ablaufende chemische Vorgänge ein positives Bild als Unikat entsteht. Die Schwarz-Weiß-Sofortbildfotografie kann auf dem Silbersalzdiffusionsverfahren beruhen. Dabei wird das belichtete Bild mit einer dickflüssigen Masse in der Kamera entwickelt und fixiert. Das unbelichtete Silberhalogenid diffundiert in das Übertragungspapier zur Schwärzung des Positivs. Der ganze Vorgang dauert nur einige Sekunden. Eine frühe Ausführung eines Geräts zu Schwarz-Weiß-Sofortbildfotografie ist beispielsweise in der US 2,435,720 beschrieben. Bei der Farb-Sofortbildfotografie wird ein Farbdiffusionsverfahren angewendet. Neben den Schichten für die Grundfarben: Blau, Grün und Rot sind weitere Schichten mit Farbentwicklermolekülen enthalten, die nach Einwirkung einer Entwickleraktivierungspaste die Entstehung des Positivs bei Anfall eines Negativs bewirken (Trennbildverfahren). Beim Integralverfahren bleibt das Negativ Bestandteil des Positivs. Hierbei ist eine Kamera mit Umkehrspiegel für ein seitenrichtiges Bild notwendig.

Der Begriff "strahlungsempfindlich" im Zusammenhang mit der Sofortbildeinrichtung kann sich insbesondere auf lichtempfindlich wie bei herkömmlichen Sofortbildfilmen bekannt beziehen. Dabei sind solche herkömmlichen lichtempfindlichen Schichten typischerweise nicht nur auf elektromagnetische Wellen im Bereich des sichtbaren Lichts empfindlich sondern auch auf andere ionisierende Strahlung wie beispielsweise Alpha-, Beta-, Gamma- und/oder Neutronenstrahlung.

Das Einleiten des Bildes auf der strahlungsempfindlichen Schicht kann durch Bestrahlung wie beispielsweise bekanntermaßen durch Belichtung erfolgen. Insbesondere kann im Sinne der Erfindung das Einleiten des Bildes durch Exposition der strahlungsempfindlichen Schicht in einer nachzuweisenden Strahlung wie beispielsweise eine vom eventuell verstrahlten Gegenstand ausgehende ionisierende Strahlung erfolgen.

Der Begriff "Schattierung" kann sich auf das Farbspektrum und/oder die Schwärzung des auf der strahlungsempfindlichen Schicht des Bildträgers eingeleiteten Bildes beziehen, wobei die Schattierung das ganze Bild oder Teile davon betreffen kann. Er kann sich insbesondere auf eine beliebige optische beziehungsweise farbliche Ausprägung auf dem Bild beziehen.

Der Einsatz des Filters ermöglicht erfindungsgemäß einen zuverlässigen und effizienten Nachweis der Verstrahlung des Gegenstands. Insbesondere kann mit dem Filter eine Schwärzung beziehungsweise Schattierung des auf der strahlungsempfindlichen Schicht des Bildträgers eingeleiteten Bildes verhindert werden. Das Filter kann so beschaffen sein, dass eine Veränderung der strahlungs- beziehungsweise lichtempfindlichen Schicht des Bildträgers der Sofortbildeinrichtung beziehungsweise des Sofortbildfilms durch Strahlung erst dann erfolgt, wenn eine kritische Dosis überschritten wird oder die Langzeitverstrahlung im einem kritischen Bereich liegt. Eine solche kritische Dosis kann beispielsweise 100 Becquerel pro Stunde sein. Die Langzeitverstrahlung kann in einem kritischen Bereich liegen und Sofortmassnahmen notwendig machen, wenn sie beispielsweise etwa 20 µSv/h überschreitet. Sie kann in einem unkritischen Bereich liegen, wenn sie beispielsweise etwa 0.2 µSv/h unterschreitet. Ein zwischenkritischer Bereich, in dem sie beispielsweise zwischen etwa 0.2 µSv/h und etwa 20 µSv/h, kann eine weitere Beobachtung notwendig machen.

Mit Hilfe des Filters kann erfindungsgemäß der Nachweis der Verstrahlung des Gegenstands beziehungsweise das Screening abhängig von der Intensität der Strahlung sein. Eine direkte Abhängigkeit von der Zeit der Verstrahlung kann vermieden werden. Somit können verhältnismäßig kurzzeitige Verstrahlung mit hohen Dosen genau so sichtbar gemacht werden wie über längere Zeit wirksame kleinere Verstrahlungen.

Die erfindungsgemäße Strahlungserkennungsvorrichtung ermöglicht einen verhältnismäßig einfachen effizienten Nachweis von Verstrahlung von Gegenständen. Insbesondere können solche Strahlungserkennungsvorrichtungen verhältnismäßig kostengünstig hergestellt werden, so dass sie effizient systematisch zur Prüfung von Waren und Personen eingesetzt werden können. Zudem sind mittels solcher Strahlungserkennungsvorrichtungen erzeugte Bilder verhältnismäßig einfach optisch auswertbar, so dass die Auswertung von verhältnismäßig ungeschulten Personen zuverlässig vollzogen werden kann und dass auch eine effiziente (semi-)automatische Auswertung beziehungsweise ein (semi-)automatisches Screening möglich ist.

Vorzugsweise umfasst die Strahlungserkennungsvorrichtung ein Befestigungsmittel, wobei die Strahlungserkennungsvorrichtung mittels des Befestigungsmittels am Gegenstand befestigbar ist. Das Befestigungsmittel kann insbesondere ein Klebstoff sein, der beispielsweise vor dem Befestigen der Strahlungserkennungsvorrichtung am Gegenstand durch Abziehen einer Schutzfolie freigelegt werden kann. Eine solche Befestigungsvorrichtung ermöglicht einen einfachen effizienten Einsatz der Strahlungserkennungsvorrichtung.

Vorzugsweise weist das Filter mehrere Bereiche unterschiedlicher Filterwirkung auf, wobei das Filter die strahlungsempfindliche Schicht des Bildträgers abdeckt, so dass die strahlungsempfindliche Schicht unterschiedlich stark gefiltert bestrahlbar ist. Auf diese Weise können auf der strahlungsempfindlichen Schicht mehrere Bereiche definiert werden, die unterschiedlich stark bestrahlt werden. Entsprechend kann mit einer solchen Ausgestaltung ein Bild erzeugt werden, dass für ein verhältnismäßig breites Spektrum an Verstrahlungen einen Nachweis möglich macht und eine qualitative Aussage über die Verstrahlung zulässt. Beispielsweise können auf einem solchen Bild unterschiedliche Schwärzungen auftreten, die bestimmte Aussagen über die Verstrahlung erlauben und mit denen auch die Stärke der Verstrahlung eingegrenzt beziehungsweise angenähert werden kann. Zur Vereinfachung einer solchen Aussage können auf dem Bild auch Hilfssymbole ausgestaltet sein.

Dabei weist das Filter vorzugsweise drei, vier, fünf oder sechs Bereiche unterschiedlicher Filterwirkung auf. Eine solche Ausgestaltung des Filters ermöglicht eine zweckmäßig Erzeugung eines Bildes, das verhältnismäßig effizient ausgewertet werden kann und das einen zweckmäßigen Verstrahlungsnachweis ermöglicht. Insbesondere kann damit auch ein effizientes Screening mit einer zweckmäßigen qualitativen Aussage über die Verstrahlung ermöglicht werden.

Vorzugsweise umfasst das Filter eine Folie, die mit einem Filtermaterial beschichtet ist. Dabei können unterschiedliche linear beschichtete Filterdichten auf der Folie ausgestaltet sein, so dass unterschiedliche Intensitäten und ihre Auswirkungen sichtbar gemacht werden können. Das heißt, das Filter kann so aufgebaut sein, dass durch das nebeneinander Legen von unterschiedlichen zunehmenden Schichtdicken auf dem Filter als System "Keilfilter" unterschiedliche Schwärzungen auf dem Bild auftreten, die bestimmte qualitative Aussagen im Screening-Bereich über die Intensität und die Zeit erlauben können. Ein solches Filter mit einer Folie kann beispielsweise durch Aufsprayen eines beispielsweise bleihaltigen Sprays auf die Folie erfolgen. Dabei können die unterschiedlichen Bereiche durch Aufsprayen unterschiedlicher Schichtdicken erzeugt werden.

Vorzugsweise umschließt das Filter die Sofortbildeinrichtung. Eine solche Ausgestaltung des Filters ermöglicht eine verhältnismäßig einfach effiziente Konstruktion und Herstellung der Strahlungserkennungseinrichtung.

Vorzugsweise umfasst das Filter Blei. Die Verwendung von Blei beziehungsweise bleihaltigen Materialien in Strahlenfiltern ermöglicht eine effiziente und genaue Filterung und auch eine verhältnismäßig effiziente Herstellung des Filters.

Ein weiterer Aspekt der Erfindung betrifft ein Verfahren zum Nachweis einer Verstrahlung eines Gegenstands. Das Verfahren umfasst die Schritte: Anbringen einer Sofortbildeinrichtung benachbart zum Gegenstand, wobei die Sofortbildeinrichtung einen eine strahlungsempfindliche Schicht aufweisenden Bildträger und eine Entwicklungseinrinhtung zur Entwicklung und Fixierung eines auf der strahlungsempfindlichen Schicht des Bildträgers eingeleiteten Bildes umfasst; Exponieren der strahlungsempfindlichen Schicht des Bildträgers der Sofortbildeinrichtung über einen Zeitraum; Entwickeln und Fixieren eines auf der strahlungsempfindlichen Schicht des Bildträgers eingeleiteten Bildes mittels der Entwicklungseinrichtung; und Auswerten des Bildes bezüglich einer von der Verstrahlung verursachten Schattierung.

Das benachbarte Anbringen der Sofortbildeinrichtung kann beispielsweise durch Befestigen am Gegenstand selbst oder an seiner Verpackung erfolgen. Bevorzugt wird dabei die Sofortbildeinrichtung möglichst nahe am Gegenstand angebracht.

Ein solches Verfahren ermöglicht einen verhältnismäßig einfachen effizienten Nachweis von Verstrahlung von Gegenständen. In dem erfindungsgemäßen Verfahren kann zum Screening der Strahlungsintensität die sofortbildgebende Fotografie benutzt werden. Das heißt die Wirkung der Strahlung kann aktivitätsabhängig chemisch ablaufende Vorgänge in lichtempfindlichen Schichten verändern und so die Strahlungsintensität auf dem Film festhalten. Insbesondere kann mit dem erfindungsgemäßen Verfahren auf effiziente Weise ein umfassendes Screening von Gegenständen erfolgen, bei dem verhältnismäßig ungeschulte Personen oder auch entsprechende Automationseinrichtungen die Gegenstände auf Verstrahlung prüfen können. Vorzugsweise erfolgt das Auswerten des Bildes digital mittels eines Auswertegeräts. Das Auswertegerät kann beispielsweise eine bekannte digitale Fotokamera sein. Mit einer solchen Fotokamera kann das Bild fotografiert und bezüglich Farbspektrum und Schwärzung analysiert werden. Die Auswertung kann beispielsweise in einem Histogramm und/oder über die Darstellung von statistischen Werten des Bildes dargestellt werden. Bevorzugt kann das Auswertegerät wie unten beschrieben eine zur effizienten Auswertung des Bildes speziell ausgestaltete Vorrichtung sein. Die Auswertung mittels eines Auswertegeräts ermöglicht einen weiter Vereinfachung der Auswertung und eine Steigerung der Effizienz. Insbesondere kann mittels eines solchen Auswertegeräts die Auswertung auch (semi-)automatisiert erfolgen.

Vorzugsweise wird bei dem Verfahren eine Strahlungserkennungsvorrichtung wie oben beschrieben verwendet, wobei die Strahlungserkennungsvorrichtung an dem Gegenstand angebracht wird. Damit kann das Verfahren besonders effizient und zweckmäßig durchgeführt werden.

Ein anderer weiterer Aspekt der Erfindung betrifft ein Auswertegerät zum Auswerten eines mit dem beschriebenen Verfahren erzeugten Bildes bezüglich einer von einer Verstrahlung verursachten Schattierung, das eine Aufnahmeeinrichtung, eine Analyseeinrichtung und eine Anzeigeeinrichtung umfasst, wobei die Aufnahmeeinrichtung dazu ausgestaltet ist, das Bild zu digitalisieren, die Analyseeinrichtung dazu ausgestaltet ist, ein Spektrum des digitalisierten Bildes zu berechnen, und die Anzeigeeinrichtung dazu ausgestaltet ist, auf Grund des berechneten Spektrums ein der Verstrahlung entsprechenden Signal anzuzeigen. Der Begriff "Spektrum" kann sich in diesem Zusammenhang auf das Farbspektrum des Bildes und/oder seine Schwärzung beziehen. An Stelle der Anzeigeeinrichtung kann das Auswertegerät auch Mittel umfassen, mit denen der Gegenstand automatisch bearbeitet werden kann. Beispielsweise kann das Auswertegerät so ausgestaltet sein, dass beispielsweise mittels eines Förderbands automatisch zugeführte Waren geprüft werden, wobei eine Ware von geeigneten Mitteln entfernt wird, falls eine Verstrahlung festgestellt wird.

Eine solches Auswertegerät ermöglicht ein besonders effizientes Screening von Gegenständen bezüglich deren Verstrahlung. Insbesondere ermöglicht es einen (semi-) automatisierten Nachweis der Verstrahlung von Gegenständen. Auch kann die Auswertung eines mittels des beschriebenen Verfahrens erzeigten Bildes vereinfacht werden.

Vorzugsweise ist die Anzeigeeinrichtung dazu ausgestaltet, ein Warnsignal anzuzeigen, wenn ein auf Grund des berechneten Spektrums berechneter Wert einen vordefinierten Wert überschreitet. Das Warnsignal kann dabei ein akustisches und/oder optisches Warnsignal sein. Damit kann eine weitere Vereinfachung in der Bedienung und somit im gesamten Screening erreicht werden. Dabei umfasst das Auswertegerät vorzugsweise eine Einstelleinrichtung, die dazu ausgestaltet ist, dass der vordefinierte Wert durch einen Benutzer einstellbar ist. Auf diese Weise kann das Auswertegerät auf verschiedene Verwendungszwecke eingestellt werden, was einen breiten Einsatz ermöglicht.

### Kurze Beschreibung der Zeichnungen

Im Folgenden werden die erfindungsgemäße Strahlungserkennungsvorrichtung, das erfindungsgemäße Verfahren und das erfindungsgemäße Auswertegerät unter Bezugnahme auf die beigefügten Zeichnungen anhand von Ausführungsbeispielen detaillierter beschrieben. Es zeigen:
- Fig. 1: eine Sicht auf einen Teststreifen als erstes Ausführungsbeispiel einer erfindungsgemäßen Strahlungserkennungsvorrichtung;
- Fig. 2: eine Sicht auf den Teststreifen von Fig. 1, wobei gewisse innere Komponenten des Teststreifens sichtbar sind;
- Fig. 3: eine Querschnittansicht entlang der Linie A-A des Teststreifens von Fig. 1;
- Fig. 4: eine Querschnittansicht entlang der Linie B-B des Teststreifens von Fig. 1;
- Fig. 5: eine Sicht auf ein Ausführungsbeispiel eines erfindungsgemäßen Auswertegeräts;
- Fig. 6: ein erstes Ausführungsbeispiel einer Anzeige eines erfindungsgemäßen Auswertegeräts;
- Fig. 7: ein zweites Ausführungsbeispiel einer Anzeige eines erfindungsgemäßen Auswertegeräts, in der ein verhältnismäßig schwach gefärbtes Bild ausgewertet ist;
- Fig. 8: die Anzeige von Fig. 7, in der ein verhältnismäßig stark gefärbtes Bild ausgewertet ist.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach außen" bezeichnen Richtungen hin zum oder weg vom geometrischen Mittelpunkt des Teststreifen oder des Auswertegeräts sowie benannter Teile derselben. Die Terminologie umfasst die oben ausdrücklich erwähnten Wörter, Ableitungen von denselben und Wörter ähnlicher Bedeutung.

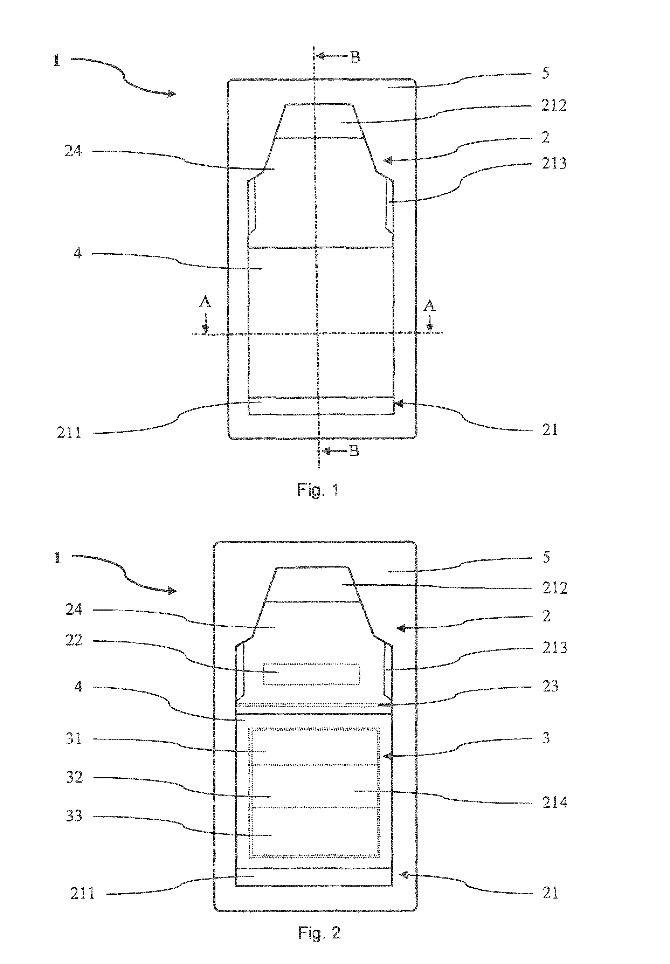

Fig. 1 zeigt einen Teststreifen 1 als ein erstes Ausführungsbeispiel einer Strahlungserkennungsvorrichtung. Der Teststreifen 1 umfasst eine Sofortbildeinrichtung 2 mit einem Bildträger 21, der in der Aufsicht im Wesentlichen rechteckig ausgestaltet ist und an einem seiner Längsenden einen an die im Wesentlichen rechteckige Form anschließenden Laschenbereich aufweist. Der Bildträger 21 ist von einer Abziehfolie 24 abgedeckt, wobei der Bildträger 21 die Abziehfolie 24 an seinem Laschenbereich nach außen hin beziehungsweise in Fig. 1 nach oben hin überragt, so dass ein Haupthaltebereich 212 gebildet ist. Die Abziehfolie 24 ist an einem an den Laschenbereich anschließenden Bereich schmaler ausgestaltet als der Bildträger 21, so dass der Bildträger 21 die Abziehfolie 24 an dieser Stelle in Fig. 1 nach links und rechts beziehungsweise seitlich überragt und so jeweils einen Seitenhaltebereich 213 bildet.

Über einen Teil seines im Wesentlichen rechteckigen Abschnitts ist der Bildträger 21 zusammen mit der Abziehfolie 24 von einem Bildschutzblatt 4 abgedeckt. Das Bildschutzblatt 4 erstreckt sich über die volle Breite des Bildträgers 21 und der Abziehfolie 24 und wird in Richtung entgegen des Laschenbereichs vom Bildträger 21 und von der Abziehfolie 24 in einem Randabschnitt 211 überragt.

Der Teststreifen 1 umfasst weiter eine transparente Schutzfolie 5, die die anderen Komponenten des Teststreifens 1 umschließt.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen arwähnt, die in der zugehörigen Figur nicht enthalten sind, so wird auf die vorangehenden Figuren verwiesen.

Wie in Fig. 2 gezeigt, weist der Bildträger 21 eine strahlungsempfindliche Schicht 214 auf. Der Teststreifen 1 umfasst weiter eine Filterfolie 3 als Filter, welche die strahlungsempfindliche Schicht 214 des Bildträgers 21 abdeckt. Die Filterfolie 3 ist so beschaffen, dass eine Veränderung der strahlungsempfindlichen Schicht 214 durch Strahlung erst dann erfolgt, wenn eine kritische Dosis von beispielsweise 100 Bequerel pro Stunde überschritten ist oder eine Langzeitverstrahlung in einem kritischen Bereich liegt Die Filterfolie 3 ist in einen ersten Filterbereich 31, einen zweiten Filterbereich 32 und einen dritten Filterbereich 33 aufgeteilt, die jeweils eine unterschiedliche Filterwirkung aufweisen. Die Filterfolie 3 und die strahlungsempfindliche Schicht 214 sind vollständig vom Bildschutzblatt 4 abgedeckt.

Im Bereich in Richtung seines Laschenbereichs ist auf dem Bildträger 21 ein Reservoir 22 mit einer Entwickleraktivierungspaste angeordnet. Das Reservoir 22 ist von der Abziehfolie 24 abgedeckt. Zwischen dem Reservoir 22 und dem Bildschutzblatt 4 ist ein Hilfsstreifen 23 zwischen Bildträger 21 und Abziehfolie 24 quer über den Bildträger 21 angeordnet.

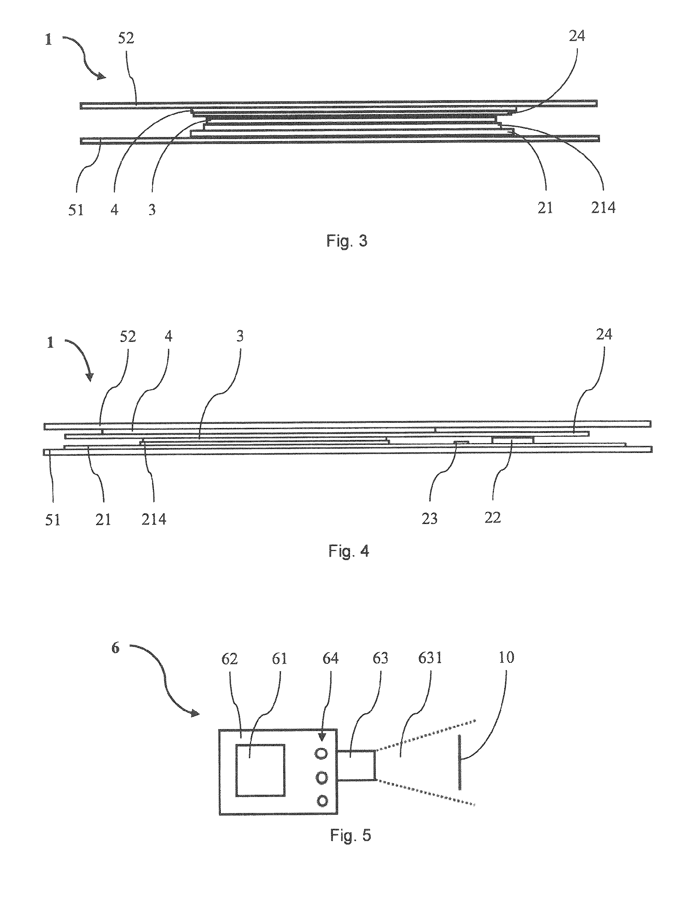

Die Fig. 3 und die Fig. 4 zeigen den Teststreifen 1 im Querschnitt, wobei die einzelnen Komponenten jeweils schematisch in ebener Ausführung als Sandwichkonstruktion dargestellt sind.

Wie im in Fig. 3 gezeigten sich in Querrichtung des Teststreifens 1 erstreckenden Querschnitt ersichtlich ist, umfasst die Schutzfolie 5 eine untere erste Folie 51 und eine obere zweite Folie 52. Auf der ersten Folie 51 ist der Bildträger 21 mit seiner strahlungsempfindlichen Schicht 214 angeordnet. An die strahlungsempfindliche Schicht 21 grenzt nach oben die Filterfolie 3 an, die von der Abziehfolie 24 und dem darauf angeordneten Bildschutzblatt 4 abgedeckt ist. Oberhalb des Bildschutzblatts 4 ist die obere Folie 52 der Schutzfolie 5 angeordnet.

Wie im in Fig. 4 gezeigten sich in Längsrichtung des Teststreifens 1 erstreckenden Querschnitt ersichtlich ist, erstreckt sich die strahlungsempfindliche Schicht 214 des Bildträgers 21 und die Filterfolie 3 über einen in Fig. 4 links liegenden Bildbereich des Bildträgers 21. In Fig. 4 rechts davon also in Richtung des Laschenbereichs ist das Reservoir 22 auf dem Bildträger 21 angeordnet. Zwischen Bildbereich und Reservoir 22 ist der Hilfsstreifen 23 auf dem Bildträger 21 angeordnet. Der Bildbereich, der Hilfsstreifen 23 und das Reservoir 22 sind von der Abziehfolie 24 abgedeckt.

Die untere Folie 51 und die obere Folie 52 sind in ihren die anderen Komponenten überragenden Bereichen miteinander verschweißt (in Fig. 3 und in Fig. 4 nicht ersichtlich), so dass die Schutzfolie 5 die anderen Komponenten des Teststreifens 1 vollständig einschließt und vor äußeren Einflüssen schützt.

In der Anwendung des Teststreifen 1 in einem erfindungsgemäßen Verfahren zum Nachweis einer Verstrahlung eines Gegenstands wird der Teststreifen 1 am Gegenstand befestigt. Dazu kann die untere Folie 51 auf seiner Außenseite einen Klebstoff als Befestigungsmittel aufweisen, so dass der Teststreifen 1 an den Gegenstand geklebt werden kann. Während dem der Teststreifen 1 so am Gegenstand befestigt ist, ist er und insbesondere die strahlungsempfindlichen Schicht 214 des Bildträgers 21 der Sofortbildeinrichtung 2 einer potentiell vom Gegenstand ausgehenden Strahlung ausgesetzt. Zu einem bestimmten oder beliebigen Zeitpunkt wird dann die Entwickteraktivierungspaste beispielsweise manuell aus dem Reservoir 22 gedrückt und über die strahlungsempfindliche Schicht 214 verteilt. Dann wird die obere Folie 52 der Schutzfolie 5 und die Abziehfolie 24 zusammen mit dem Bildschutzblatt 4 und der Filterfolie 3 beispielsweise manuell abgezogen. Dadurch wird ein durch die Verstrahlung des Gegenstands auf der strahlungsempfindlichen Schicht 214 des Bildträgers 21 eingeleitetes Bild entwickelt und fixiert. Je nach der Strahlungsexposition sind auf dem Bild durch die Strahlung verursachte Schattierungen als Schwärzungen beziehungsweise Färbungen vorhanden, die in von den drei Filterbereichen 31, 32, 33 der Filterfolie 3 abgedeckten Bereichen unterschiedlich stark ausfallen können. Das Bild wird dann bezüglich der von der Verstrahlung verursachten Schattierung ausgewertet wodurch Rückschlüsse bezüglich der Verstrahlung des Gegenstands gemacht werden können. Das Bild stellt dabei ein verhältnismäßig fälschungssicheres Unikat dar.

Der Teststreifen 1 ermöglicht ein Screening nach Verstrahlung, das abhängig von der Intensität der Strahlung und nicht direkt abhängig von der Zeit der Verstrahlung ist. Kurzzeitige Verstrahlung mit hohen Dosen können genau so sichtbar werden wie über längere Zeit wirksame kleinere Verstrahlungen.

Zudem können durch die unterschiedlichen beispielsweise mit Blei linear beschichteten Filterdichten in den Filterbereichen 31, 32, 33 der Filterfolie 3 unterschiedliche Intensitäten und ihre Auswirkungen sichtbar gemacht werden. Das heißt, die Filterfolie 3 ist so aufgebaut, dass durch das nebeneinander Legen der unterschiedlichen zunehmenden Schichtdicken in den drei Filterbereichen 31, 32, 33 (System "Keilfilter") unterschiedliche Schwärzungen beziehungsweise Färbungen als Schattierungen auftreten, die bestimmte Aussagen im Screening-Bereich über die Intensität und die Zeit erlauben. Um eine vereinfachte Auswertung des Bildes zu ermöglichen, können beispielsweise am Bildrand Symbole ausgestaltet sein, mit denen die Filterbereiche kenntlich gemacht werden können.

Zusammenfassend kann der Teststreifen als Nachweisgerät bezeichnet werden, das eine Schwärzung beziehungsweise Färbung fotografischen Materials durch einfallende Strahlung nutzt. Die Dosisleistung kann der auf eine Zeiteinheit bezogene Äequivalentdosis in Sv/h, Sv/min oder Sv/s entsprechen. Das Nachweisgerät kann beispielsweise im Dosisbereich von mehr als 20 µSv/h eingesetzt werden und kann für Photonenenergien zwischen beispielsweise 20 keV und 3 MeV geeignet sein. Beispielsweise kann das Nachweisgerät für strahlenexponierte Produkte aller Art verwendet werden, wobei eine überdurchschnittliche, schädliche Strahlenbelastung bei Auslösung des Entwicklungsvorgangs in wenigen Sekunden aufgedeckt werden kann. Es kann auch mit Strahlungsumwandlern wie beispielsweise Cd-Blech für Neutronen in Gammastrahlung universell angewendet werden. Es kann integrierend arbeiten. Insbesondere kann der Teststreifen 1 beziehungsweise das Nachweisgerät einen Film mit lichtempfindlichen Schichten und ein Übertragungspapier mit der Entwickleraktivierungspaste darstellen. Wird das Deckblatt beziehungsweise die obere Folie 52 der Schutzfolie 5 und die Abziehfolie 24 zusammen mit dem Bildschutzblatt 4 und der Filterfolie 3 abgezogen, so wird die Entwickleraktivierungspaste auf dem Übertragungsblatt aktiviert, die lichtempfindlichen Schichten werden belichtet und das Bild entsteht. Die vorher auf den lichtempfindlichen Schichten von der Strahlung umgesetzten Photonenenergien werden jetzt als Schwärzung beziehungsweise Färbung sichtbar.

In Fig. 5 ist ein Auswertegerät 6 gezeigt, wie es für eine (semi-)automatische Auswertung eines beispielsweise mittels oben beschriebenem Teststreifen 1 oder einem anderen Ausführungsbeispiel eines Teststreifens 10 erzeugt wird. Das Auswertegerät 6 umfasst ein Gehäuse 62 und eine Aufnahmeeinrichtung 63. Die Aufnahmeeinrichtung 63 ist dazu ausgestaltet, einen bestimmten Aufnahmebereich 631 abzudecken, in dem das aufzunehmende Bild des Teststreifens 10 anzuordnen ist. Im Gehäuse 62 ist eine Anzeigeeinrichtung eingebaut, die eine von außen her sichtbare Anzeige 61 und drei Warnlämpchen 64 aufweist Die Warnlämpchen 64 sind in den Farben grün, orange und rot ausgestaltet. Im Innern des Auswertegeräts 6 ist weiter eine Analyseeinrichtung angeordnet (in Fig. 5 nicht ersichtlich).

Im Betrieb wird ein auf dem Teststreifen 10 erzeugtes Bild von der Aufnahmeeinrichtung 63 aufgenommen und digitalisiert. Die Analyseeinrichtung untersucht dann das digitalisierte Bild, indem dessen Spektrum berechnet. Je nach berechnetem Spektrum als Indikator für die Schattierung des digitalisierten Bildes leuchtet dann das rote, das orange oder das grüne der drei Warnlämpchen 64 auf. Da die Schattierung des Bildes mit seiner Strahlenexposition korreliert, kann je nach stärke der Schattierung ein anderes Warnlämpchen 64 aufleuchten. Insbesondere kann bei verhältnismäßig starker Schattierung das rote, bei mittleren Schattierung das orange und bei verhältnismäßig schwacher Schattierung das grüne Warnlämpchen 64 aufleuchten. Insbesondere leuchtet beispielsweise das rote Warnlämpchen auf, falls das Spektrum einen vordefinierten Wert übersteigt.

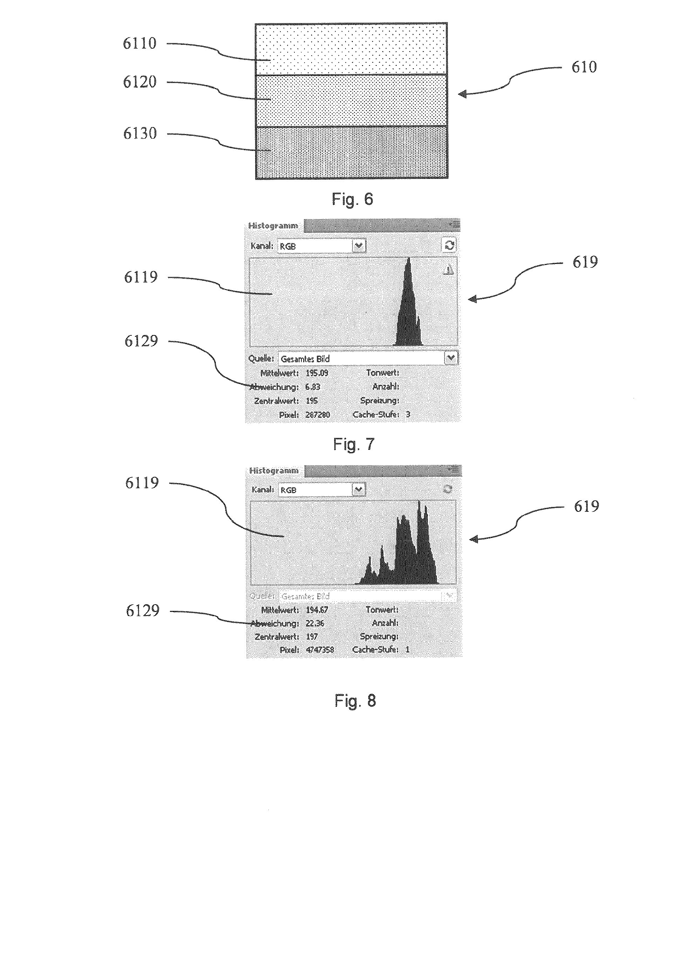

Fig. 6 zeigt ein Ausführungsbeispiel einer Anzeige 610 eines Bildes, die drei Bereiche aufweist. Die drei Bereiche entsprechen drei Bereichen des Bildes, die während einer Bestrahlung unterschiedlich gefiltert wurden. Insbesondere umfasst die Anzeige 610 einen ersten Bereich 6110 mit verhältnismäßig schwacher Schattierung, einen zweiten Bereich 6120 mit mittlerer Schattierung und einen dritten Bereich 6130 mit verhältnismäßig starker Schattierung.

In der Fig. 7 ist weiteres Ausführungsbeispiel einer Anzeige 619 gezeigt, die beispielsweise zusammen mit der Anzeige 610 von Fig. 6 dargestellt werden kann. Die Anzeige 619 umfasst einen grafischen Bereich 6119, in dem ein Histogramm des ausgewerteten Bildes dargestellt ist, und einen numerischen Bereich 6129, in dem verschiedene berechnete Werte dargestellt sind. Insbesondere ist im numerischen Bereich auch eine Abweichung angegeben, die als Maß für die Schattierung herangezogen werden kann. In der in der Fig. 7 gezeigten Ansicht stellt die Anzeige 619 ein erstes Bild mit verhältnismäßig schwacher Schattierung dar, was sich beispielsweise in einem verhältnismäßig tiefen Abweichungswert manifestiert. Entsprechend kann ein Gegenstand, an dem der dieses erste Bild erzeugende Teststreifen befestigt war, als unproblematisch eingestuft werden. Demgegenüber stellt die Anzeige 619 in der in der Fig. 8 gezeigten Ansicht ein zweites Bild mit verhältnismäßig starker Schattierung dar, was sich beispielsweise in einem verhältnismäßig hohen Abweichungswert manifestiert. Entsprechend kann ein Gegenstand, an dem der dieses zweite Bild erzeugende Teststreifen befestigt war, als problematisch eingestuft werden.

Obwohl die Erfindung mittels der Figuren und der zugehörigen Beschreibung dargestellt und detailliert beschrieben ist, sind diese Garstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondre umfasst die Erfindung ebenfalls Ausführungsformen mit jeglicher Kombination von Merkmalen, die vorstehend oder nachfolgend zu verschiedenen Ausführungsformen genannt oder gezeigt sind. Zum Beispiel kann die Erfindung auch durch folgende weitere konstruktive Variationen realisiert sein:
- Der Teststreifen kann zweckmäßigerweise zwischen etwa 1 cm bis etwa 9 cm breit und etwa 3 cm bis etwa 11 cm lang sein.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand ausgeschlossen sein.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schrift erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Strahlungserkennungsvorrichtung (1; 10) zum Nachweis einer Verstrahlung eines Gegenstandes, umfassend
eine Sofortbildeinrichtung (2) mit einem eine strahlungsempfindliche Schicht (214) aufweisenden Bildträger (21) und einer Entwicklungseinrichtung (22) zur Entwicklung und Fixierung eines auf der strahlungsempfindlichen Schicht (214) des Bildträgers (21) eingeleiteten Bildes; und
ein Filter (3), das die strahlungsempfindliche Schicht (214) des Bildträgers (21) abdeckt, so dass die strahlungsempfindliche Schicht (214) gefiltert bestrahlbar ist.

2. Strahlungserkennungsvorrichtung (1; 10) nach Anspruch 1, die ein Befestigungsmittel umfasst, wobei die Strahlungserkennungsvorrichtung (1; 10) mittels des Befestigungsmittels am Gegenstand befestigbar ist.

3. Strahlungserkennungsvorrichtung (1; 10) nach Anspruch 1 oder 2, bei der das Filter (3) mehrere Bereiche (31, 32, 33) unterschiedlicher Filterwirkung aufweist, wobei das Filter (3) die strahlungsempfindliche Schicht (214) des Bildträgers (21) abdeckt, so dass die strahlungsempfindliche Schicht (214) unterschiedlich stark gefiltert bestrahlbar ist.

4. Strahlungserkennungsvorrichtung (1; 10) nach Anspruch 3, bei dem das Filter (3) drei, vier, fünf oder sechs Bereiche (31, 32, 33) unterschiedlicher Filterwirkung aufweist.

5. Strahlungserkennungsvorrichtung (1; 10) nach einem der vorangehenden Ansprüche, bei dem das Filter (3) eine Folie umfasst, die mit einem Filtermaterial beschichtet ist.

6. Strahlungserkennungsvorrichtung (1; 10) nach einem der vorangehenden Ansprüche, bei dem das Filter (3) die Sofortbildeinrichtung (2) vollständig umschließt.

7. Strahlungserkennungseinrichtung nach einem der vorangehenden Ansprüche, bei dem das Filter (3) Blei umfasst.

8. Verfahren zum Nachweis einer Verstrahlung eines Gegenstands, **gekennzeichnet durch** die Schritte:
Anbringen einer Sofortbildeinrichtung (2) benachbart zum Gegenstand, wobei die Sofortbildeinrichtung (2) einen eine strahlungsempfindliche Schicht (214) aufweisenden Bildträger (21) und eine Entwicklungseinrichtung (22) zur Entwicklung und Fixierung eines auf der strahlungsempfindlichen Schicht (214) des Bildträgers (21) eingeleiteten Bildes umfasst;
Exponieren der strahlungsempfindlichen Schicht (214) des Bildträgers (21) der Sofortbildeinrichtung (2) über einen Zeitraum;
Entwickeln und Fixieren eines auf der strahlungsempfindlichen Schicht (214) des Bildträgers (21) eingeleiteten Bildes mittels der Entwicklungseinrichtung (22); und
Auswerten des Bildes bezüglich einer von der Verstrahlung verursachten Schattierung.

9. Verfahren nach Anspruch 8, bei dem das Auswerten des Bildes digital mittels eines Auswertegeräts (6) erfolgt.

10. Verfahren nach Anspruch 8 oder 9, bei dem eine Strahlungserkennungsvorrichtung (1; 10) gemäß einem der Ansprüche 1 bis 7 verwendet wird, wobei die Strahlungserkennungsvorrichtung (1; 10) an dem Gegenstand angebracht wird.

11. Auswertegerät (6) zum Auswerten eines mit dem Verfahren nach einem der Ansprüche 8 bis 10 erzeugten Bildes bezüglich einer von einer Verstrahlung verursachten Schattierung, das eine Aufnahmeeinrichtung (63), eine Analyseeinrichtung und eine Anzeigeeinrichtung (61, 64) umfasst, wobei die Aufnahmeeinrichtung (63) dazu ausgestaltet ist, das Bild zu digitalisieren, die Analyseeinrichtung dazu ausgestaltet ist, ein Spektrum des digitalisierten Bildes zu berechnen, und die Anzeigeeinrichtung (61, 64) dazu ausgestaltet ist, auf Grund des berechneten Spektrums ein der Verstrahlung entsprechenden Signal anzuzeigen.

12. Auswertegerät nach Anspruch 11, bei dem die Anzeigeeinrichtung (61, 64) dazu ausgestaltet ist, ein Warnsignal anzuzeigen, wenn ein auf Grund des berechneten Spektrums berechneter Wert einen vordefinierten Wert überschreitet.

13. Auswertegerät nach Anspruch 12, das eine Einstelleinrichtung umfasst, die dazu ausgestaltet ist, dass der vordefinierte Wert durch einen Benutzer einstellbar ist.
